# FASCICULE DE BREVET EUROPEEN

(11) **EP 3 489 665 B1**
(45) Date de publication et mention de la délivrance du brevet: **13.05.2020**
(21) Numéro de dépôt: 18205770.3
(22) Date de dépôt: 12.11.2018
(51) Int. Cl.: G01N 21/95, G01N 21/55, G01N 21/84, G01N 21/88, G01M 11/00

(54) **SYSTÈME DE SURVEILLANCE DE LA DÉGRADATION ET DE L'ENCRASSEMENT D'UN MIROIR**
ÜBERWACHUNGSSYSTEM DER DEGRADATION UND DER VERSCHMUTZUNG EINES SPIEGELS
SYSTEM FOR MONITORING DEGRADATION AND FOULING OF A MIRROR

(30) Priorité: 22.11.2017 FR 1761041
(43) Date de publication de la demande: 29.05.2019
(73) Titulaire: Commissariat à l'Energie Atomique et aux Energies Alternatives, 75015 Paris (FR)
(72) Inventeur: RACCURT, Olivier, 13830 Roquefort-la-Bédoule (FR); PESCHEUX, Anne-Claire, 73000 Chambéry (FR); DELORD, Christine, 13830 Roquefort-la-Bédoule (FR); GIRAUD, Philémon, 38660 Le Touvet (FR)
(74) Mandataire: Cabinet Beaumont

(56) Documents cités:
- EP-A1- 0 600 800
- WO-A1-2017/017297
- WO-A2-2014/023498
- JP-A- H0 933 446
- JP-A- 2007 263 612
- US-A1- 2011 001 962
- US-A1- 2014 192 345
- BROGREN M ET AL: "Analysis of the effects of outdoor and accelerated ageing on the optical properties of reflector materials for solar energy applications", SOLAR ENERGY MATERIALS AND SOLAR CE, ELSEVIER SCIENCE PUBLISHERS, AMSTERDAM, NL, vol. 82, no. 4, 30 mai 2004 (2004-05-30), pages 491-515, XP004507478, ISSN: 0927-0248

## Description

### Domaine

La présente demande concerne un système de surveillance de la dégradation et de l'encrassement d'un miroir.

### Exposé de l'art antérieur

On connaît des centrales de production d'énergie électrique à partir du rayonnement solaire, prévues pour concentrer l'énergie solaire sur un élément de conversion, par exemple un élément de conversion thermoélectrique ou un élément de conversion photovoltaïque, au moyen de miroirs.

Un miroir d'une centrale de production d'énergie électrique à partir du rayonnement solaire comprend classiquement une couche réfléchissante, par exemple métallique, protégée du côté de sa face avant (c'est-à-dire du côté de sa face de réflexion de la lumière) par une couche transparente, par exemple en verre. Généralement, la couche réfléchissante est en outre protégée, en face arrière, par au moins une couche de protection non nécessairement transparente.

La performance d'un miroir est caractérisée par sa réflectivité solaire spéculaire. Avec le temps, on observe une diminution de la réflectivité solaire spéculaire du miroir, pouvant conduire à une diminution du rendement de la centrale. La diminution de la réflectivité solaire spéculaire d'un miroir peut résulter de plusieurs phénomènes parmi lesquels :
- la corrosion de sa couche réfléchissante, provoquant une dégradation de ses propriétés réfléchissantes ;
- l'abrasion ou l'érosion de sa couche de protection transparente de face avant sous l'effet d'éléments extérieurs (poussière, sable, etc.) ou sous l'effet des nettoyages répétés des miroirs, provoquant une diminution de la transparence de cette couche ; et
- l'encrassement du miroir lié au dépôt de particules sur la face extérieure de sa couche de protection transparente de face avant, provoquant là encore une diminution de la transparence de cette couche.

Pour caractériser le vieillissement des miroirs, la réflectivité solaire spéculaire peut être mesurée, par exemple à l'aide d'un réflectomètre portatif.

Les dispositifs de caractérisation connus ne permettent toutefois pas de distinguer une baisse de réflectivité solaire spéculaire liée à l'encrassement du miroir, d'une baisse de réflectivité solaire spéculaire liée à la corrosion de sa couche réfléchissante, ou encore à l'abrasion ou à l'érosion de sa couche transparente de protection de face avant.

Il serait souhaitable de pouvoir disposer d'un système de caractérisation permettant de distinguer une baisse de réflectivité spéculaire liée à l'encrassement du miroir, d'une baisse de réflectivité spéculaire liée à la corrosion de sa couche réfléchissante, ou à l'abrasion ou l'érosion de sa couche de protection de face avant.

En effet, à la différence de la corrosion, de l'abrasion et de l'érosion, l'encrassement du miroir est un défaut réversible, pouvant être traité en procédant à un nettoyage du miroir. Les opérations de nettoyage des miroirs d'une centrale solaire sont toutefois coûteuses. De plus, répétées, elles peuvent conduire à une dégradation du miroir, entrainant une perte de performance (diminution de la réflectance spéculaire solaire), par exemple par abrasion de la face avant de la couche de protection transparente, c'est-à-dire à une dégradation irréversible du miroir.

Disposer d'un système capable de fournir des mesures corrélées de baisse de réflectivité solaire spéculaire et de taux d'encrassement d'un miroir permettrait notamment d'optimiser la fréquence de mise en oeuvre des opérations de nettoyage des miroirs.

Le document JPH0933446 décrit des exemples d'appareils d'inspection de défauts de surface.

### Résumé

WO 2014/023498 A2 divulgue un système de mesure comprenant un capteur d'image et une optique de réception pour déterminer les caractéristiques de réflexion des matériaux de miroirs solaires. Ainsi, un mode de réalisation prévoit un système de surveillance d'un miroir, comportant une tête d'analyse comprenant une tête d'émission adaptée à émettre un faisceau lumineux en direction du miroir, et une tête de réception adaptée à recevoir un faisceau lumineux en provenance du miroir, dans lequel la tête de réception comprend un photodétecteur, un capteur d'image, et une lame partiellement réfléchissante et partiellement transparente agencée pour séparer le faisceau reçu par la tête de réception en un premier faisceau transmis au capteur d'image et un deuxième faisceau transmis au phototdétecteur, le système comprenant en outre un dispositif de contrôle et de traitement relié au photodétecteur et au capteur d'image de la tête de réception, le dispositif de contrôle et de traitement étant adapté à mesurer une valeur de réflectivité du miroir à partir d'une mesure d'intensité lumineuse reçue réalisée par le photodétecteur, et un taux d'encrassement du miroir à partir d'une image acquise par le capteur d'image.

Selon un mode de réalisation, la tête d'émission est couplée à une source lumineuse.

Selon un mode de réalisation, la source lumineuse est externe à la tête d'analyse, et est reliée à la tête d'émission par une fibre optique.

Selon un mode de réalisation, la source lumineuse comprend plusieurs sources lumineuses élémentaires montées sur un support mécanique mobile réglable pour sélectionner la source lumineuse élémentaire utilisée pour produire le faisceau émis par la tête d'émission.

Selon un mode de réalisation, les sources lumineuses élémentaires de la source lumineuse sont des diodes électroluminescentes.

Selon un mode de réalisation, la tête d'émission comprend en outre un photodétecteur et une lame partiellement réfléchissante et partiellement transparente agencée pour séparer le faisceau émis par la source lumineuse en un premier faisceau transmis en direction du miroir et un deuxième faisceau transmis au photodétecteur de la tête d'émission.

Selon un mode de réalisation, la direction d'émission de la tête d'émission et la direction de réception de la tête de réception de la tête d'analyse sont réglables.

Selon un mode de réalisation, la direction d'émission de la tête d'émission et la direction de réception de la tête de réception sont réglables indépendamment l'une de l'autre.

Selon un mode de réalisation, la tête d'analyse comprend un rail de support en arc de cercle sur lequel sont montées la tête d'émission et la tête de réception.

Selon un mode de réalisation, la tête d'émission est adaptée à émettre un faisceau lumineux en direction du centre de l'arc de cercle, et la tête de réception est adaptée à recevoir un faisceau lumineux en provenance du centre de l'arc de cercle.

Selon un mode de réalisation, la tête d'émission et la tête de réception sont mobiles en translation le long du rail de support.

Selon un mode de réalisation, les positions de la tête d'émission et de la tête de réception sur le rail de support sont réglables indépendamment l'une de l'autre.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en coupe schématique d'un miroir dont on cherche à surveiller la dégradation et l'encrassement ;
la figure 2 est un schéma simplifié d'un exemple d'un mode de réalisation d'un système de surveillance de la dégradation et de l'encrassement d'un miroir ; et
les figures 3, 4, 5 et 6 sont des diagrammes illustrant l'évolution du comportement d'un miroir sous l'effet de divers phénomènes de vieillissement.

### Description détaillée

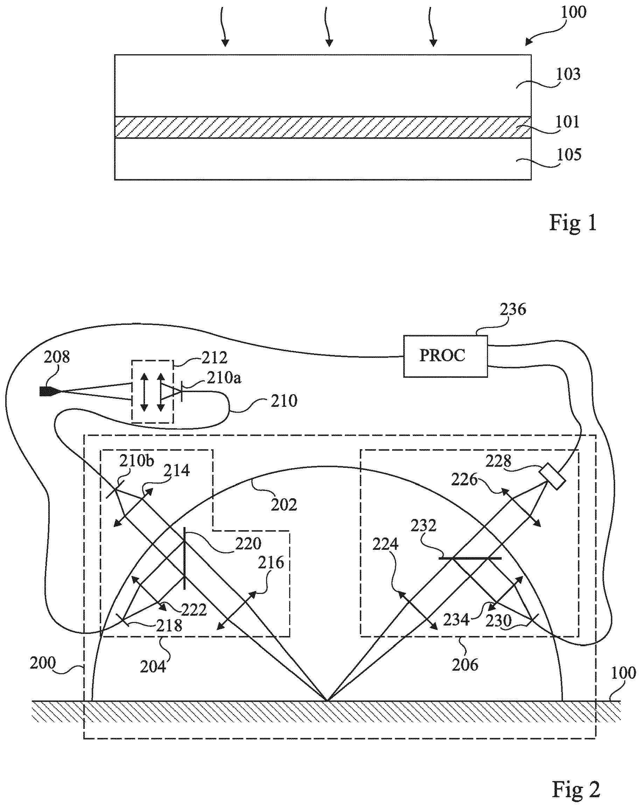

De mêmes éléments ont été désignés par de mêmes références dans les différentes figures et, de plus, les diverses figures ne sont pas tracées à l'échelle. Par souci de clarté, seuls les éléments utiles à la compréhension des modes de réalisation décrits ont été représentés et sont détaillés. En particulier, la réalisation des divers éléments du système de surveillance de la figure 2 n'a pas été détaillée, la réalisation de ces éléments étant à la portée de l'homme du métier à partir des indications fonctionnelles de la présente description. Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des figures, étant entendu que, en pratique, les dispositifs décrits peuvent être orientés différemment. Sauf précision contraire, les expressions "approximativement", "sensiblement", et "de l'ordre de" signifient à 10 % près, de préférence à 5 % près.

La figure 1 est une vue en coupe schématique d'un exemple d'un miroir 100 dont on cherche à surveiller la dégradation et l'encrassement, par exemple un miroir d'une centrale de production d'énergie électrique à partir de l'énergie solaire. On notera que, en pratique, les miroirs à surveiller peuvent être des miroirs plans ou des miroirs courbes.

Le miroir 100 de la figure 1 comprend une couche réfléchissante 101, par exemple métallique, protégée, en face avant (face supérieure en figure 1) par une couche transparente 103, par exemple en verre ou en un matériau polymère transparent au rayonnement solaire. Dans l'exemple représenté, la couche de protection transparente 103 est disposée en contact avec la face avant de la couche réfléchissante 101. La couche réfléchissante 101 est par exemple une couche d'argent. Dans cet exemple, le miroir 100 comprend en outre une couche de protection de face arrière 105 revêtant la face arrière de la couche réfléchissante 101. La couche de face arrière 105 est par exemple en contact avec la face arrière de la couche réfléchissante 101. A titre d'exemple, la couche de protection de face arrière 105 comprend au moins une couche en un matériau polymère.

Plus généralement, les systèmes de surveillance décrits ci-après peuvent être utilisés pour surveiller toutes ou la plupart des structures connues de miroirs, et en particulier les miroirs réalisés dans les trois principales technologies de miroirs connues, à savoir :
- les miroirs en verre, parmi lesquels les miroirs monolithiques protégés en face arrière par une ou plusieurs couches de peinture, les miroirs laminés sur un substrat en verre ou en tout autre matériau adapté, et les miroirs composites comprenant un miroir en verre collé ou moulé dans un matériau polymère ;
- les miroirs aluminium, dont la couche arrière est une feuille d'aluminium, par exemple d'épaisseur comprise entre 1 et 3 mm ; et
- les miroirs polymères, qui sont des films polymères métallisés pouvant être collés sur tout type de support.

La figure 2 est un schéma simplifié d'un exemple d'un mode de réalisation d'un système de surveillance de la dégradation et de l'encrassement d'un miroir 100 du type décrit en relation avec la figure 1. Sur la figure 2, les différentes couches du miroir 100 n'ont pas été détaillées.

Le système de surveillance de la figure 2 comprend une tête d'analyse 200, par exemple une tête portative. La tête d'analyse 200 comprend un rail support 202 en arc de cercle, c'est-à-dire s'étendant longitudinalement selon une portion de cercle, par exemple selon un demi-cercle. La tête d'analyse 200 comprend en outre, montées sur le rail support 202, une tête d'émission 204 adaptée à émettre un faisceau lumineux en direction du centre de l'arc de cercle, et une tête de réception 206 adaptée à recevoir un faisceau lumineux en provenance du centre de l'arc de cercle. La tête d'émission 204 et la tête de réception 206 sont montées coulissantes sur le rail support 202. A titre d'exemple, la tête d'émission 204 peut coulisser le long du rail 202 sur une première moitié de la longueur du rail (la moitié gauche dans l'orientation de la figure 2), et la tête de réception 206 peut coulisser le long du rail 202 sur une deuxième moitié de la longueur du rail (la moitié droite dans l'orientation de la figure 2). La position de la tête d'émission 204 sur la première moitié du rail 202 et la position de la tête de réception 206 sur la deuxième moitié du rail 202 sont réglables indépendamment l'une de l'autre. Dans cet exemple, quelle que soit la position de la tête d'émission 204 sur la première moitié du rail 202, l'axe principal d'émission de la tête d'émission est un axe radial de l'arc de cercle suivi par le rail support 202, et quelle que soit la position de la tête de réception 206 sur la deuxième moitié du rail 202, l'axe principal de réception de la tête de réception est un axe radial de l'arc de cercle suivi par le rail 202, c'est-à-dire coïncidant sensiblement avec un rayon de l'arc de cercle.

En fonctionnement, la tête d'analyse est destinée à être positionnée en vis-à-vis du miroir 100 à surveiller, du côté de la face avant du miroir (sa face supérieure dans l'orientation de la figure 2), de façon que le centre de l'arc de cercle suivi par le rail support 202 soit situé sensiblement sur la face avant du miroir 100.

Le système de surveillance de la figure 2 comprend en outre une source lumineuse 208 adaptée à produire la lumière du faisceau d'analyse émis par la tête d'émission 204. La source lumineuse 208 peut être intégrée à la tête d'émission 204. Toutefois, pour limiter l'encombrement de la tête d'analyse et favoriser sa portabilité, la source lumineuse peut être déportée. Ceci correspond à la configuration illustrée par la figure 2. Dans cette configuration, le système de surveillance comprend une fibre optique 210 reliant la source lumineuse 208 à la tête d'émission 204. Le système peut en outre comporter un système optique 212 couplant la sortie de la source lumineuse 208 à l'entrée de la fibre optique 210. Le système optique 212 permet notamment, le cas échéant, d'adapter les dimensions du faisceau lumineux produit par la source lumineuse 208 aux dimensions de la face d'entrée 210a de la fibre optique 210. A titre d'exemple, le système optique 212 comprend un doublet de lentilles permettant de réduire les dimensions du faisceau lumineux produit par la source lumineuse 208 pour les ajuster aux dimensions de la face d'entrée de la fibre optique 210. A titre d'exemple, le système optique 212 permet de passer d'un diamètre de faisceau de l'ordre de 5 mm en sortie de la source lumineuse 208 à un diamètre de faisceau de l'ordre de 1 mm à l'entrée de la fibre optique 210.

La tête d'émission 202 comprend un premier système optique 214, comprenant par exemple une lentille convergente, adapté à collimater la lumière émise par la face de sortie 210b de la fibre optique 210, de façon à générer un faisceau parallèle d'axe central radial. La tête d'émission 202 peut en outre comprendre un deuxième système optique 216, comprenant par exemple une lentille convergente, adapté à focaliser le faisceau parallèle de sortie du système optique 214 en un point de la surface du miroir coïncidant sensiblement avec le centre de l'arc de cercle suivi par le rail support 202. Dans ce cas, l'éclairage du miroir 100 par la tête d'émission est un éclairage ponctuel. A titre de variante, le deuxième système optique 216 peut être omis, auquel cas l'éclairage du miroir 100 par la tête d'émission est un éclairage étendu uniforme, la zone éclairée étant centrée en un point de la surface du miroir coïncidant sensiblement avec le centre de l'arc de cercle suivi par le rail support 202 et ayant des dimensions définies par la pupille de sortie du système optique 214. Plus généralement, le diamètre de la zone du miroir 100 éclairée par la tête d'émission peut être choisi en fonction des besoins de l'application, en sélectionnant de manière appropriée le jeu de lentilles utilisé dans les systèmes optiques 214 et 216. A titre d'exemple, le diamètre de la tache d'éclairement du miroir 100 par la tête d'émission 204 peut être compris entre 1 et 50 mm, par exemple entre 3 et 25 mm.

Dans l'exemple représenté, la tête d'émission 202 comprend de plus un photodétecteur 218, par exemple une photodiode, et une lame partiellement réfléchissante et partiellement transparente 220. La lame 220 est placée sur le trajet du faisceau parallèle de sortie du système optique 214 (entre le système optique 214 et le système optique 216 dans l'exemple représenté), et forme un angle oblique, par exemple un angle d'environ 45 degrés, avec l'axe optique principal de sortie du système optique 214. La lame 220 est de préférence non sélective en fréquence, c'est-à-dire que son coefficient de transmission et son coefficient de réflexion sont sensiblement indépendants de la longueur d'onde dans toute la gamme de longueurs d'ondes d'émission de la source lumineuse 208. En fonctionnement, la lame 220 transmet une partie du faisceau de sortie du système optique 214 en direction du miroir 100, et réfléchit une autre partie de ce faisceau, par réflexion spéculaire, dans une direction fixée par l'angle d'inclinaison de la lame 220 par rapport à l'axe optique de sortie du système optique 214. La tête d'émission 204 comprend de plus un système optique 222, comprenant par exemple une lentille convergente, adapté à focaliser le faisceau parallèle réfléchi par la lame 220 sur le photodétecteur 218.

La tête de réception 206 présente une structure sensiblement symétrique à celle de la tête d'émission 204. Plus particulièrement, elle comprend dans cet exemple un premier système optique 224, par exemple identique ou similaire au système optique 216, adapté à collimater la lumière provenant du centre de l'arc de cercle suivi par le rail 202 en un faisceau parallèle d'axe central radial. La tête de réception 206 comprend en outre un deuxième système optique 226, par exemple identique ou similaire au système optique 214, adapté à focaliser le faisceau parallèle de sortie du système optique 224 sur un capteur d'image 228, par exemple un capteur matriciel comprenant une pluralité de pixels commandables individuellement, agencés selon des rangées et des colonnes.

La tête de réception 206 du système de la figure 2 comprend de plus un photodétecteur 230, par exemple identique ou similaire au photodétecteur 218, et une lame partiellement réfléchissante et partiellement transparente 232, par exemple identique ou similaire à la lame 220. La lame 232 est placée sur le trajet du faisceau parallèle de sortie du système optique 224 (entre le système optique 224 et le système optique 226 dans l'exemple représenté), et forme un angle oblique, par exemple un angle d'environ 45 degrés, avec l'axe optique principal de sortie du système optique 224. En fonctionnement, la lame 232 transmet une partie du faisceau de sortie du système optique 224 en direction du capteur d'image 228, et réfléchit une autre partie de ce faisceau, par réflexion spéculaire, dans une direction fixée par l'angle d'inclinaison de la lame 232 par rapport à l'axe optique de sortie du système optique 224. La tête de réception 206 comprend de plus un système optique 234, comprenant par exemple une lentille convergente, adapté à focaliser le faisceau parallèle réfléchi par la lame 232 sur le photodétecteur 230.

On notera que si la tête d'émission 204 ne comprend pas le système optique 216 (cas d'un éclairage étendu uniforme du miroir par la tête d'émission), le système optique 224 de la tête de réception 206 peut également être omis.

La source lumineuse 208 est adaptée à produire de la lumière à au moins une longueur d'onde du spectre solaire. De préférence, la source lumineuses 208 est adaptée à produire de la lumière à plusieurs longueurs d'ondes du spectre solaire. A titre d'exemple, la source lumineuse 208 est réglable en longueur d'onde d'émission. Pour cela, la source lumineuse 208 peut comprendre plusieurs sources élémentaires distinctes (non détaillées sur la figure 2), chaque source élémentaire étant adaptée à émettre dans une gamme de longueur d'onde spécifique distincte des gammes de longueurs d'ondes d'émission des autres sources élémentaires. A titre d'exemple, chaque source élémentaire est adaptée à émettre dans une gamme de longueur d'onde spécifique relativement étroite, par exemple une gamme de longueur d'onde de largeur à mi-hauteur inférieure 20 nm. Chaque source élémentaire est par exemple une diode électroluminescente (LED). A titre d'exemple, la source lumineuse 208 comprend neuf sources élémentaires, par exemple de type LED, ayant respectivement des longueurs d'ondes centrales d'émission de l'ordre de 365 nm (ultra-violet), 405 nm (violet), 450 nm (bleu), 490 nm (vert), 525 nm (vert), 630 nm (orange), 660 nm (rouge), 760 nm (rouge) et 850 nm (infrarouge). A titre d'exemple, les différentes sources lumineuses élémentaires sont montées sur un support mécanique mobile (non détaillé sur la figure 2), par exemple un support circulaire mobile en rotation, permettant de positionner la source élémentaire souhaitée devant l'entrée de la fibre optique 210, ou, le cas échéant, du système optique 212, selon la longueur d'onde à laquelle on souhaite éclairer le miroir. A titre de variante, la source lumineuse 208 est une source unique adaptée à émettre dans une gamme de longueurs d'ondes étendue, par exemple une source de lumière blanche.

Le système de la figure 2 comprend de plus un dispositif électronique de contrôle et de traitement 236 (PROC), par exemple un ordinateur, relié notamment aux photodétecteurs 218 et 230 et au capteur d'image 228, et adapté à analyser les signaux de sortie des photodétecteurs 218 et 230 et du capteur d'image 228.

Le système de surveillance de miroir de la figure 2 offre de nombreuses possibilités d'analyses.

Le système de la figure 2 permet notamment de mesurer la réflectivité spéculaire du miroir. Pour cela, la tête d'émission est positionnée à une première position du rail support 202, de façon à fixer l'angle d'incidence du faisceau d'analyse sur le miroir, et la tête de réception est positionnée sur l'axe de réflexion spéculaire du faisceau d'analyse par le miroir, c'est-à-dire symétriquement (par rapport à la normale au plan du miroir) par rapport à la tête de réception. Le dispositif de contrôle et de traitement 236 est alors adapté à mesurer d'une part l'intensité lumineuse reçue par le photodétecteur 218 de la tête d'émission 204 et d'autre part l'intensité lumineuse reçue par le photodétecteur 230 de la tête de réception 206, et à faire le ratio de ces deux valeurs d'intensité pour déterminer la réflectivité spéculaire du miroir à la ou aux longueurs d'ondes d'émission de la source lumineuse.

La mesure peut en outre être réitérée pour plusieurs angles d'incidence distincts du faisceau d'émission, de façon à déterminer la réflectivité spéculaire du miroir pour différents angles d'incidence.

De plus, dans le cas où la source lumineuse 208 est réglable en longueur d'onde, chaque mesure peut être effectuée pour plusieurs longueurs d'ondes distinctes pour mesurer la réflectivité spéculaire du miroir pour différentes longueurs d'ondes.

Le dispositif de contrôle et de traitement 236 est par exemple adapté à comparer la réflectivité spéculaire mesurée à une réflectivité spéculaire nominale du miroir, c'est-à-dire la réflectivité spéculaire qu'aurait le miroir en l'absence de dégradation ou d'encrassement. A titre d'exemple, la ou les valeurs de réflectivité spéculaire nominales sont stockées dans une mémoire du dispositif de contrôle et de traitement 236. Ces valeurs sont par exemple déterminées lors d'une phase de calibration du système à partir d'un miroir non dégradé et non encrassé.

On notera que, côté tête d'émission 204, le photodétecteur 218 et la lame semi-réfléchissante 220 sont facultatifs. En effet, la réflectivité spéculaire du miroir peut être déterminée par le dispositif de contrôle et de traitement 236 uniquement à partir des mesures fournies par le photodétecteur 230 de la tête de réception 206. Toutefois, la prévision du photodétecteur 218 et de la lame semi-réfléchissante 220 côté tête d'émission permettent d'améliorer la précision de la mesure. En particulier, ceci permet de s'affranchir d'éventuelles fluctuations parasites d'intensité de la source lumineuse 208 ou d'éventuelles erreurs d'alignement entre la source lumineuse 208 et la fibre optique 210.

Par ailleurs, le fait que les positions de la tête d'émission 204 et de la tête de réception 206 soient réglables individuellement permet de réaliser des mesures de réflectivité non spéculaire. Plus particulièrement, pour une position donnée de la tête d'émission 204, c'est-à-dire pour un angle d'incidence donné du faisceau d'émission sur le miroir, plusieurs mesures de réflectivité peuvent être réalisées pour des positions différentes de la tête de réception 206, par exemple de façon à balayer une plage angulaire de mesure s'étendant de part et d'autre de l'angle de réflexion spéculaire du miroir. Ceci permet notamment de détecter des défauts de type érosion ou abrasion de la couche de protection de face avant du miroir, ou encore encrassement de cette couche de protection, pouvant conduire à élargir ou rétrécir le cône de réflexion du faisceau émis par la tête d'émission 204, ou encore à modifier l'orientation de la direction principale de réflexion du faisceau.

Le système de surveillance de la figure 2 est tout particulièrement avantageux en ce qu'il permet, pour chaque mesure de réflectivité réalisée, d'obtenir non seulement la mesure de réflectivité proprement dite, déduite de la mesure d'intensité réalisée par le photodétecteur 230, mais également une image de la portion de surface du miroir analysée, au moyen du capteur 228. Pour chaque mesure de réflectivité, l'image acquise par le capteur 228 et la mesure de réflectivité sont directement corrélées, puisqu'elles sont obtenues simultanément, pour un même angle d'incidence d'éclairement du miroir, et avec un même faisceau d'éclairement du miroir.

Le dispositif de contrôle et de traitement 236 est configuré pour mettre en oeuvre un procédé automatisé d'analyse des images acquises par le capteur 228, en vue de détecter d'éventuels défauts sur la surface du miroir, et notamment de déterminer un taux d'encrassement du miroir, par exemple par comptage du nombre de particules déposées par unité de surface. On notera en particulier que des méthodes d'analyse d'image classiques peuvent aisément être implémentées pour différentier des défauts de type rayures ou fissures de la couche de protection de face avant du miroir, d'un encrassement du miroir, ou encore d'une corrosion de la couche réfléchissante du miroir. Ainsi, si une perte de réflectivité solaire spéculaire significative et un encrassement significatif du miroir sont détectés simultanément, il pourra être décidé de procéder à un nettoyage en vue de restaurer au moins partiellement la réflectivité du miroir. Si au contraire une perte de réflectivité solaire spéculaire est détectée alors que le taux d'encrassement du miroir est faible, on pourra en déduire qu'il est inutile de procéder à un nettoyage du miroir dans la mesure où cela ne permettra pas d'améliorer significativement sa réflectivité.

En complément des méthodes d'analyse susmentionnées, le système de surveillance de la figure 2 peut en outre être utilisé pour mettre en oeuvre des méthodes d'analyse permettant, à partir des seules mesures de réflectivité spéculaire du miroir, de distinguer des défauts de type abrasion ou érosion de la couche de protection de face avant du miroir, d'une corrosion de la couche réfléchissante du miroir. En effet, il est connu que la perte de réflectivité spéculaire engendrée par une corrosion de la couche réfléchissante du miroir est variable en fonction de la longueur d'onde, tandis que la perte de réflectivité spéculaire engendrée par des défauts de type abrasion ou érosion de la couche transparente de protection du miroir est sensiblement indépendante de la longueur d'onde. La perte de réflectivité spéculaire liée à l'encrassement peut quant à elle dépendre de la longueur d'onde, en fonction de la nature des particules déposées et du spectre d'absorption de ces particules.

Ainsi, on peut prévoir d'effectuer plusieurs mesures de réflectivité spéculaire à des longueurs d'ondes distinctes, de façon à déterminer si la perte de réflectivité spéculaire (par rapport à la réflectivité spéculaire nominale) est constante ou non en fonction de la longueur d'onde, de façon à identifier le type de défaut affectant le miroir.

On notera qu'outre l'analyse des signaux de sortie des photodétecteurs 218 et 230 et du capteur d'image 228, le dispositif de contrôle et de traitement 236 peut être adapté à commander la source lumineuse 208 et/ou le déplacement des têtes d'émission 204 et de réception 206, de façon à mettre en oeuvre les procédés d'analyse décrits ci-dessus de façon entièrement automatisée. Pour cela, les têtes d'émission 204 et de réception 206 de la tête d'analyse 200 peuvent être motorisées de façon à permettre un contrôle électronique de leurs positions respectives sur le rail support 202. De plus, dans le cas où la source lumineuse 208 est réglable en longueur d'onde, celle-ci peut comporter des moyens de contrôle électronique de sa longueur d'onde d'émission. A titre d'exemple, dans le cas d'une source 208 comprenant une pluralité de sources lumineuses élémentaires montées sur un support mécanique mobile, le support mécanique mobile peut être motorisé pour permettre un contrôle électronique de la position du support devant l'entrée de la fibre optique 210 ou du système optique 212, en fonction de la longueur d'onde à laquelle on souhaite éclairer le miroir.

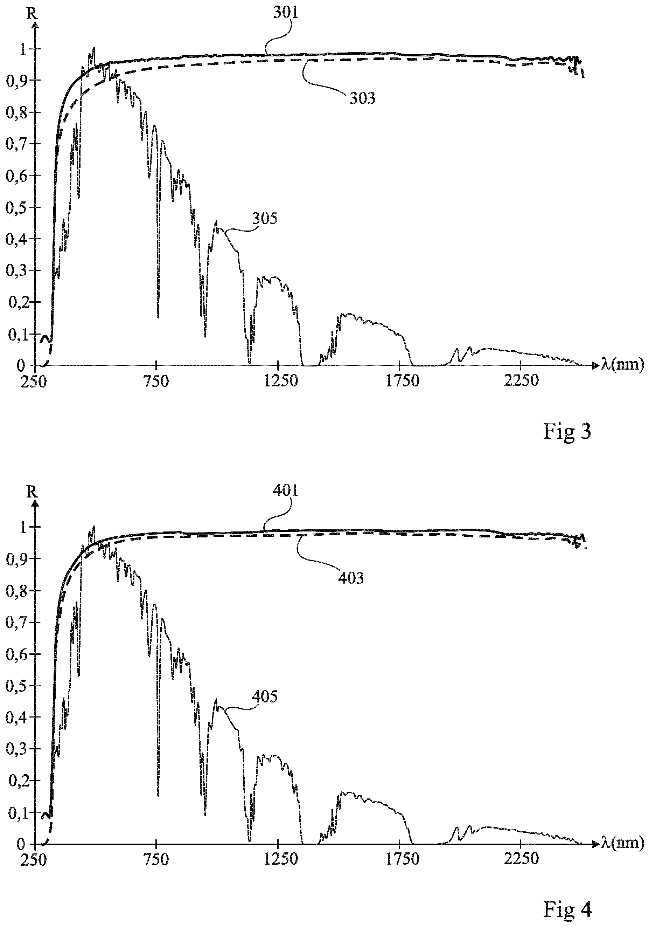

Les figures 3, 4, 5 et 6 sont des diagrammes représentant, à titre d'exemples illustratifs, l'évolution du comportement d'un miroir sous l'effet de divers phénomènes de vieillissement.

La figure 3 est un diagramme illustrant l'évolution, en fonction de la longueur d'onde λ (en abscisse, en nm), de la réflectivité spéculaire R du miroir (en ordonnée, sans unité), pour un miroir de référence non dégradé (courbe 301 en trait plein), et pour un miroir dont la couche réfléchissante est corrodée (courbe 303 en traits interrompus éloignés). La courbe 305 en traits interrompus serrés représente quant à elle le spectre solaire. Comme cela ressort de la figure 3, la perte de réflectivité spéculaire liée à la corrosion du miroir est plus importante pour des longueurs d'ondes faibles, typiquement entre 350 et 850 nm, que pour des longueurs d'ondes élevées, typiquement entre 850 et 2450 nm.

La figure 4 est un diagramme illustrant l'évolution, en fonction de la longueur d'onde λ (en abscisse, en nm), de la réflectivité spéculaire R du miroir (en ordonnée, sans unité), pour un miroir de référence non dégradé (courbe 401 en trait plein), et pour un miroir dont la couche transparente de protection de face avant a subi une abrasion ou une érosion (courbe 403 en traits interrompus éloignés). La courbe 405 en traits interrompus serrés représente quant à elle le spectre solaire. Comme cela ressort de la figure 4, la perte de réflectivité spéculaire liée à l'érosion ou à l'abrasion du miroir est sensiblement constante sur toute l'étendue du spectre solaire.

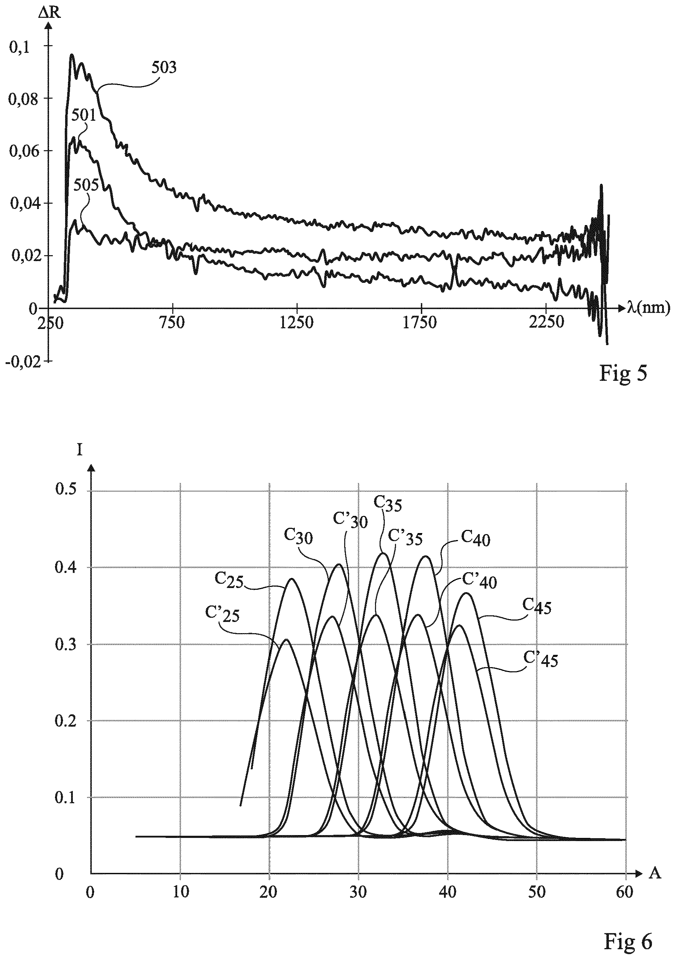

La figure 5 est un diagramme illustrant l'évolution, en fonction de la longueur d'onde λ (en abscisse, en nm), de la perte de réflectivité spéculaire ΔR d'un miroir par rapport à sa réflectivité spéculaire nominale (en ordonnée, sans unité), pour un miroir corrodé mais non érodé ni abrasé et non encrassé (courbe 501) et pour un miroir corrodé et encrassé mais non érodé ni abrasé (courbe 503). La courbe 505 représente quant à elle la différence entre les courbes 503 et 505, et correspond à la perte de réflectivité spéculaire du miroir lié à son seul encrassement.

La figure 6 est un diagramme illustrant, pour chacun d'une pluralité d'angles d'incidence du faisceau émis par la tête d'émission 204 du système d'analyse, l'évolution, en fonction de la position angulaire A de la tête de réception 206 du système (en abscisse, en degrés), de l'intensité I du signal lumineux réfléchi tel que mesuré par le photodétecteur 230 de la tête de réception (en ordonnée, en valeur normalisée sans unité). Pour chaque angle d'incidence du faisceau d'analyse, c'est-à-dire pour chaque position angulaire de la tête d'émission 204, une première courbe est tracée pour un miroir de référence non dégradé et non encrassé, et une deuxième courbe est tracée pour un miroir encrassé ou présentant une érosion ou une abrasion en face avant. Plus particulièrement, le diagramme de la figure 6 comprend cinq courbes C₄₅, C₄₀, C₃₅, C₃₀ et C₂₅, correspondant aux mesures réalisées sur le miroir de référence, respectivement pour des angles d'incidence du faisceau d'analyse sur le miroir de 45°, 40°, 35°, 30° et 25°. Le diagramme de la figure 6 comprend de plus cinq courbes C₄₅', C₄₀', C₃₅', C₃₀' et C₂₅', correspondant aux mesures réalisées sur le miroir dégradé, respectivement pour des angles d'incidence du faisceau d'analyse sur le miroir de 45°, 40°, 35°, 30° et 25°.

Il ressort du diagramme de la figure 6 que quel que soit l'angle d'incidence du faisceau d'analyse sur le miroir, la largeur relative à mi-hauteur du cône de réflexion du faisceau par le miroir est plus faible pour un miroir propre et non dégradé que pour un miroir présentant des défauts de type abrasion, érosion ou encrassement. Cet élargissement du cône de réflexion est caractéristique des défauts de surface présents sur la face avant de la couche transparente de protection du miroir, et sa détection permet de différentier de tels défauts de surface d'une dégradation interne de la couche réfléchissante.

Des modes de réalisation particuliers ont été décrits. Diverses variantes et modifications apparaîtront à l'homme de l'art. En particulier, les modes de réalisation décrits ne se limitent pas aux exemples de dimensions et de matériaux mentionnés dans la présente description.

De plus, les modes de réalisation décrits ne se limitent pas à l'exemple de réalisation structurelle de la tête d'analyse 200 décrit en relation avec la figure 2. Plus généralement, l'homme du métier saura prévoir d'autres réalisations structurelles de la tête d'analyse permettant de mettre en oeuvre le fonctionnement décrit ci-dessus, c'est-à-dire permettant de régler de façon indépendante la direction d'émission de la tête d'émission et la direction de réception de la tête de réception. A titre d'exemple de réalisation alternative, la tête d'émission peut comprendre une pluralité d'émetteurs fixes adaptés à éclairer le miroir selon des angles d'incidence distincts, activables individuellement pour sélectionner l'angle d'incidence souhaité lors d'une phase d'analyse. De façon similaire, la tête de réception peut comprendre une pluralité de récepteurs fixes adaptés à recevoir des faisceaux lumineux provenant de la surface du miroir selon des directions distinctes, les récepteurs étant sélectionnables individuellement pour analyser les différentes composantes angulaires du faisceau réfléchi. Pour réaliser une telle tête d'analyse, on peut par exemple prévoir de répliquer à l'identique plusieurs fois la tête d'émission 204 et la tête de réception 206 de la figure 2. A titre de variante, un fonctionnement similaire peut être obtenu en déportant la tête d'émission 204 et la tête de réception 206 de la figure 2 et en réalisant les émetteurs et récepteurs multiples au moyen d'un système de fibres optiques multiplexées.

## Revendications

1. Système de surveillance d'un miroir (100), comportant une tête d'analyse (200) comprenant une tête d'émission (204) adaptée à émettre un faisceau lumineux en direction du miroir, et une tête de réception (206) adaptée à recevoir un faisceau lumineux en provenance du miroir, dans lequel la tête de réception (202) comprend un photodétecteur (230), un capteur d'image (228), et une lame partiellement réfléchissante et partiellement transparente (232) agencée pour séparer le faisceau reçu par la tête de réception en un premier faisceau transmis au capteur d'image (228) et un deuxième faisceau transmis au photodétecteur (230),
le système comprenant en outre un dispositif de contrôle et de traitement (236) relié au photodétecteur (230) et au capteur d'image (228) de la tête de réception (206), le dispositif de contrôle et de traitement (236) étant adapté à déterminer une valeur de réflectivité du miroir à partir d'une mesure d'intensité lumineuse reçue réalisée par le photodétecteur (230), et un taux d'encrassement du miroir à partir d'une image acquise par le capteur d'image (228).

2. Système selon la revendication 1, dans lequel la mesure d'intensité lumineuse utilisée pour déterminer la valeur de réflectivité du miroir et l'acquisition de l'image utilisée pour déterminer le taux d'encrassement du miroir sont simultanées.

3. Système selon la revendication 1 ou 2, dans lequel la tête d'émission (204) est couplée à une source lumineuse (208).

4. Système selon la revendication 3, dans lequel la source lumineuse (208) est externe à la tête d'analyse (200), et est reliée à la tête d'émission (204) par une fibre optique (210) .

5. Système selon la revendication 3 ou 4, dans lequel la source lumineuse (208) est réglable en longueur d'onde d'émission.

6. Système selon la revendication 5, dans lequel la source lumineuse (208) comprend plusieurs sources lumineuses élémentaires montées sur un support mécanique mobile réglable pour sélectionner la source lumineuse élémentaire utilisée pour produire le faisceau émis par la tête d'émission (204).

7. Système selon la revendication 6, dans lequel les sources lumineuses élémentaires de la source lumineuse (208) sont des diodes électroluminescentes.

8. Système selon l'une quelconque des revendications 3 à 7, dans lequel la tête d'émission (204) comprend en outre un photodétecteur (218) et une lame partiellement réfléchissante et partiellement transparente (220) agencée pour séparer le faisceau émis par la source lumineuse (208) en un premier faisceau transmis en direction du miroir et un deuxième faisceau transmis au photodétecteur (218) de la tête d'émission.

9. Système selon l'une quelconque des revendications 1 à 8, dans lequel la direction d'émission de la tête d'émission (204) et la direction de réception de la tête de réception (206) de la tête d'analyse (200) sont réglables.

10. Système selon la revendication 9, dans lequel la direction d'émission de la tête d'émission (204) et la direction de réception de la tête de réception (206) sont réglables indépendamment l'une de l'autre.

11. Système selon l'une quelconque des revendications 1 à 10, dans lequel la tête d'analyse comprend un rail de support (202) en arc de cercle sur lequel sont montées la tête d'émission (204) et la tête de réception (206).

12. Système selon la revendication 11, dans lequel la tête d'émission (204) est adaptée à émettre un faisceau lumineux en direction du centre de l'arc de cercle, et la tête de réception (206) est adaptée à recevoir un faisceau lumineux en provenance du centre de l'arc de cercle.

13. Système selon la revendication 11 ou 12, dans lequel la tête d'émission (204) et la tête de réception (206) sont mobiles en translation le long du rail de support (202).

14. Système selon la revendication 13, dans lequel les positions de la tête d'émission (204) et de la tête de réception (206) sur le rail de support (202) sont réglables indépendamment l'une de l'autre.

15. Utilisation, pour la surveillance d'un miroir (100), d'un système comportant une tête d'analyse (200) comprenant une tête d'émission (204) adaptée à émettre un faisceau lumineux et une tête de réception (206) adaptée à recevoir un faisceau lumineux, dans lequel la tête de réception (202) comprend un photodétecteur (230), un capteur d'image (228), et une lame partiellement réfléchissante et partiellement transparente (232) agencée pour séparer le faisceau reçu par la tête de réception en un premier faisceau transmis au capteur d'image (228) et un deuxième faisceau transmis au photodétecteur (230),
dans laquelle la tête d'émission est agencée pour émettre un faisceau lumineux en direction du miroir et la tête de réception est agencée pour recevoir un faisceau lumineux en provenance du miroir,
et dans laquelle le système comprend en outre un dispositif de contrôle et de traitement (236) relié au photodétecteur (230) et au capteur d'image (228) de la tête de réception (206), le dispositif de contrôle et de traitement (236) étant commandé pour mesurer une valeur de réflectivité du miroir à partir d'une mesure d'intensité lumineuse reçue réalisée par le photodétecteur (230), et un taux d'encrassement du miroir à partir d'une image acquise par le capteur d'image (228).

## Patentansprüche

1. System zum Überwachen eines Spiegels (100), das einen Sensorkopf (200) mit einem Emissions- bzw. Sendekopf (204), der in der Lage ist, einen Lichtstrahl in Richtung des Spiegels auszusenden, und einen Empfangskopf (206), der in der Lage ist, einen von dem Spiegel ausgehenden Lichtstrahl zu empfangen, aufweist,
wobei der Empfangskopf (202) einen Fotodetektor (230), einen Bildsensor (228) und einen Strahlteiler (232) aufweist, der so angeordnet ist, dass er den von dem Empfangskopf empfangenen Strahl in einen ersten, zu dem Bildsensor (228) übertragenen Strahl und einen zweiten, zu dem Fotodetektor (230) übertragenen Strahl aufteilt,
wobei das System ferner eine Steuer- und Verarbeitungsvorrichtung (236) aufweist, die mit dem Fotodetektor (230) und dem Bildsensor (228) des Empfangskopfes (206) gekoppelt ist, wobei die Steuer- und Verarbeitungsvorrichtung (236) in der Lage ist, einen Wert des Reflexionsvermögens des Spiegels basierend auf einer Messung der empfangenen Lichtintensität, die durch den Fotodetektor (230) durchgeführt wird, und eine Spiegel-Verschmutzungsrate basierend auf einem durch den Bildsensor (228) erfassten Bild zu bestimmen.

2. System nach Anspruch 1, wobei die Lichtintensitätsmessung, die zur Bestimmung des Reflexionswertes des Spiegels verwendet wird, und die Erfassung des Bildes, das zur Bestimmung der Spiegel-Verschmutzungsrate verwendet wird, gleichzeitig erfolgen.

3. System nach Anspruch 1 oder 2, wobei der Sendekopf (204) mit einer Lichtquelle (208) gekoppelt ist.

4. System nach Anspruch 3, wobei die Lichtquelle (208) außerhalb des Sensorkopfes (200) liegt und über eine optische Faser (210) mit dem Sendekopf (204) gekoppelt ist.

5. System nach Anspruch 3 oder 4, wobei die Lichtquelle (208) eine einstellbare Emissionswellenlänge hat.

6. System nach Anspruch 5, wobei die Lichtquelle (208) eine Vielzahl von elementaren Lichtquellen aufweist, die auf einem beweglichen mechanischen Träger montiert sind, der einstellbar ist, um die elementare Lichtquelle auszuwählen, die zur Erzeugung des vom Sendekopf (204) emittierten Strahls verwendet wird.

7. System nach Anspruch 6, wobei die elementaren Lichtquellen der Lichtquelle (208) Leuchtdioden sind.

8. System nach einem der Ansprüche 3 bis 7, wobei der Sendekopf (204) ferner einen Photodetektor (218) und einen Strahlteiler (220) aufweist, die so angeordnet sind, dass sie den von der Lichtquelle (208) emittierten Strahl in einen ersten, zum Spiegel hin übertragenen Strahl und einen zweiten, zum Photodetektor (218) des Emissionskopfes übertragenen Strahl aufteilen.

9. System nach einem der Ansprüche 1 bis 8, wobei die Senderichtung des Sendekopfes (204) und die Empfangsrichtung des Empfangskopfes (206) des Sensorkopfes (200) einstellbar sind.

10. System nach Anspruch 9, wobei die Senderichtung des Sendekopfes (204) und die Empfangsrichtung des Empfangskopfes (206) unabhängig voneinander einstellbar sind.

11. System nach einem der Ansprüche 1 bis 10, wobei der Sensorkopf eine bogenförmige Tragschiene (202) aufweist, auf der der Sendekopf (204) und der Empfangskopf (206) montiert sind.

12. System nach Anspruch 11, wobei der Sendekopf (204) in der Lage ist, einen Lichtstrahl in Richtung des Mittelpunkt des Bogens auszusenden, und wobei der Empfangskopf (206) in der Lage ist, einen vom Mittelpunkt des Bogens ausgehenden Lichtstrahl zu empfangen.

13. System nach Anspruch 11 oder 12, wobei der Sendekopf (204) und der Empfangskopf (206) entlang der Trägerschiene (202) translatorisch mobil sind.

14. System nach Anspruch 13, wobei die Positionen des Sendekopfes (204) und des Empfangskopfes (206) auf der Tragschiene (202) unabhängig voneinander einstellbar sind.

15. Verwendung eines Systems zur Überwachung eines Spiegels (100), das einen Sensorkopf (200) mit einem Emissions- bzw. Sendekopf (204), der einen Lichtstrahl aussenden kann, und mit einem Empfangskopf (206), der einen Lichtstrahl empfangen kann, aufweist, wobei der Empfangskopf (202) einen Fotodetektor (230), einen Bildsensor (228) und einen Strahlteiler (232) aufweist, der so angeordnet ist, dass er den vom Empfangskopf empfangenen Strahl in einen ersten, zum Bildsensor (228) übertragenen Strahl und in einen zweiten, zum Fotodetektor (230) übertragenen Strahl aufteilt,
wobei der Sendekopf so angeordnet ist, dass er einen Lichtstrahl in Richtung des Spiegels aussendet und wobei der Empfangskopf so angeordnet ist, dass er einen vom Spiegel ausgehenden Lichtstrahl empfängt, und
wobei das System ferner eine Steuer- und Verarbeitungsvorrichtung (236) aufweist, die mit dem Fotodetektor (230) und dem Bildsensor (228) des Empfangskopfes (206) gekoppelt ist, wobei die Steuer- und Verarbeitungsvorrichtung (236) so gesteuert wird, dass sie einen Reflexionswert des Spiegels auf Grundlage einer durch den Fotodetektor (230) durchgeführten Messung der empfangenen Lichtintensität und eine Spiegel-Verschmutzungsrate auf Grundlage eines durch den Bildsensor (228) erfassten Bildes misst.

## Claims

1. A system for monitoring a mirror (100), comprising a sensor head (200) comprising an emission head (204) capable of emitting a light beam towards the mirror, and a reception head (206) capable of receiving a light beam originating from the mirror, wherein the reception head (202) comprises a photodetector (230), an image sensor (228), and a beam splitter (232) arranged to separate the beam received by the reception head into a first beam transmitted to the image sensor (228) and a second beam transmitted to the photodetector (230),
the system further comprising a control and processing device (236) coupled to the photodetector (230) and to the image sensor (228) of the reception head (206), the control and processing device (236) being capable of determining a reflectivity value of the mirror based on a measurement of the received light intensity performed by the photodetector (230), and a mirror fouling rate based on an image acquired by the image sensor (228).

2. The system according to claim 1, wherein the light intensity measurement used to determine the reflectivity value of the mirror and the acquisition of the image used to determine the mirror fouling rate are simultaneous.

3. The system according to claim 1 or 2, wherein the emission head (204) is coupled to a light source (208).

4. The system according to claim 3, wherein the light source (208) is external to the sensor head (200), and is coupled to the emission head (204) by an optical fiber (210).

5. The system according to claim 3 or 4, wherein the light source (208) has an adjustable emission wavelength.

6. The system according to claim 5, wherein the light source (208) comprises a plurality of elementary light sources assembled on a mobile mechanical support adjustable to select the elementary light source used to generate the beam emitted by the emission head (204).

7. The system according to claim 6, wherein the elementary light sources of the light source (208) are light-emitting diodes.

8. The system according to any of claims 3 to 7, wherein the emission head (204) further comprises a photodetector (218) and a beam splitter (220) arranged to separate the beam emitted by the light source (208) into a first beam transmitted towards the mirror and a second beam transmitted to the photodetector (218) of the emission head.

9. The system according to any of claims 1 to 8, wherein the emission direction of the emission head (204) and the reception direction of the reception head (206) of the sensor head (200) are adjustable.

10. The system according to claim 9, wherein the emission direction of the emission head (204) and the reception direction of the reception head (206) are adjustable independently from each other.

11. The system according to any of claims 1 to 10, wherein the sensor head comprises an arc-shaped support rail (202) having the emission head (204) and the reception head (206) assembled thereon.

12. The system according to claim 11, wherein the emission head (204) is capable of emitting a light beam towards the center of the arc, and the reception head (206) is capable of receiving a light beam originating from the center of the arc.

13. The system according to claim 11 or 12, wherein the emission head (204) and the reception head (206) are mobile in translation along the support rail (202).

14. The system according to claim 13, wherein the positions of the emission head (204) and of the reception head (206) on the support rail (202) are adjustable independently from each other.

15. A use, for the monitoring of a mirror (100), of a system comprising a sensor head (200) comprising an emission head (204) capable of emitting a light beam and a reception head (206) capable of receiving a light beam, wherein the reception head (202) comprises a photodetector (230), an image sensor (228), and a beam splitter (232) arranged to separate the beam received by the reception head into a first beam transmitted to the image sensor (228) and a second beam transmitted to the photodetector (230), wherein the emission head is arranged to emit a light beam towards the mirror and the reception head is arranged to receive a light beam originating from the mirror, and wherein the system further comprises a control and processing device (236) coupled to the photodetector (230) and to the image sensor (228) of the reception head (206), the control and processing device (236) being controlled to measure a reflectivity value of the mirror based on a measurement of the received light intensity performed by the photodetector (230) and a mirror fouling rate based on an image acquired by the image sensor (228).
